# EUROPÄISCHE PATENTSCHRIFT

(11) **EP 4 003 570 B1**
(45) Veröffentlichungstag und Bekanntmachung des Hinweises auf die Patenterteilung: **03.07.2024**
(21) Anmeldenummer: 20749871.8
(22) Anmeldetag: 30.07.2020
(51) Int. Cl.: B01D 46/00, B01D 46/10, B01D 46/52

(54) **FILTERELEMENT, INNENRAUMLUFTFILTER UND HERSTELLUNGSVERFAHREN**
FILTER ELEMENT, INTERIOR AIR FILTER AND PRODUCTION METHOD
ÉLÉMENT FILTRANT, FILTRE À AIR INTÉRIEUR ET PROCÉDÉ DE PRODUCTION

(30) Priorität: 31.07.2019 DE 102019120646
(43) Veröffentlichungstag der Anmeldung: 01.06.2022
(73) Patentinhaber: MANN+HUMMEL GmbH, 71636 Ludwigsburg (DE)
(72) Erfinder: EBNET, Daniel, 84163 Marklkofen (DE); STEMPFHUBER, Markus, 84032 Altdorf (DE); KROHLOW, Matthias, 71083 Herrenberg (DE); SCHMID, Daniel, 74343 Sachsenheim (DE)
(74) Vertreter: Mann + Hummel Intellectual Property
(86) Internationale Anmeldenummer: PCT/EP2020/071472
(87) Internationale Veröffentlichungsnummer: WO 2021/018995

(56) Entgegenhaltungen:
- EP-A1- 1 779 916
- DE-A1- 4 327 368
- DE-A1-102014 004 738
- DE-A1-102016 002 570
- DE-U1- 29 906 831

## Beschreibung

### Technisches Gebiet

Die vorliegende Erfindung betrifft ein Filterelement. Ferner betrifft die Erfindung einen Innenraumluftfilter mit einem solchen Filterelement. Noch weiterhin betrifft die Erfindung eine Filteranordnung.

Obwohl auf beliebige Filterelemente und -anordnungen anwendbar, werden die vorliegende Erfindung sowie die ihr zugrunde liegende Problematik nachfolgend für einen Innenraumfilter eines Kraftfahrzeugs beschrieben.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

Zur Filterung von Luft für den Innenraum eines Kraftfahrzeugs werden häufig gefaltete bzw. plissierte Filtermaterialien, wie etwa Filtervliese, die ein Faltenpack bilden, eingesetzt. Hierzu wird ein zunächst flächiger Filtermaterialbogen zickzackförmig gefaltet. Das Faltenpack wird beispielsweise von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

### Stand der Technik

Aus der WO 2018/050367 ist ein Filterelement bekannt, bei dem ein Kunststoffrahmen um ein Faltenpack mit einem seitlich abstehenden Steg vorgesehen ist. An den Steg ist eine umlaufende Dichtung angeformt. Die DE 10 2016 217 459 A1 offenbart ein Filterelement, bei dem an das Faltenpack und seinen Faltprofilen und Faltkanten ein formschlüssig befestigter Rahmen gebildet ist.

Ferner ist aus der DE 10 2019 102 172 A1 ein Filterelement bekannt, das einen Faltenbalg aufweist, an den ein umlaufender luftundurchlässiger Kunststoffrahmen angespritzt ist. Der Kunststoffrahmen hat eine umlaufende radiale Auskragung, auf der eine Dichtung angeordnet ist.

Darüber hinaus ist aus EP 1 779 916 A1 ein Filterelement bekannt, das ein faserhaltiges Filtermedium aufweist, an dem eine Dichtung angeordnet ist, die in einem Extrusionsverfahren mittelbar oder unmittelbar auf das Filtermedium aufgebracht ist.

Des Weiteren offenbaren DE 43 27 368 A1 und DE 299 06 831 U1 jeweils ein Filterelement mit einem faltenbalgförmigen Filtermedium, an dessen Stirnkanten und Endfalten unmittelbar ein Dichtrahmen aus einem Kunststoffmaterial angespritzt ist.

### Offenbarung der Erfindung

Vor diesem Hintergrund liegt der vorliegenden Erfindung die Aufgabe zugrunde, ein verbessertes Filterelement zu schaffen.

Demgemäß wird daher ein Filterelement mit einem Faltenpack aus zickzackförmig gefaltetem Filtermaterial und einem an dem Faltenpack angebrachten und das Faltenpack zumindest teilweise umlaufenden und seitlich abstehenden luftdurchlässigen Rahmenelement vorgeschlagen. An dem Rahmenelement ist eine Rahmeneinrichtung befestigt. Dabei ist die Rahmeneinrichtung als ein an das seitlich abstehende Rahmenelement angespritztes Spritzgussteil ausgeführt.

Anders als bei bekannten Filterelementen mit spritzgegossenen Rahmeneinrichtungen ist bei dem erfindungsgemäßen Filterelement das umlaufende Rahmenelement, an das die Rahmeneinrichtung angespritzt ist, aus einem luftdurchlässigen Material gebildet. Man könnte daher das erfindungsgemäße Filterelement als Hybrid-Filterelement bezeichnen, welches die Technologien eines kunststoffumspritzten Filterelements sowie eines Filterelements mit klassischem Rahmenelementaufbau, insbesondere in Form von Kopf- und Seitenbändern aus Vlies wie im Bereich der automotiven Innenraumfilter üblich, kombiniert. Dies hat den Vorteil, dass Produktionskosten gesenkt werden können, da die hierfür nötigen Spritzgusswerkzeuge weniger aufwändig konstruiert sind, und bietet zudem die Möglichkeit, mehr und/oder enger zueinander angeordnete Falten vorzusehen. Dies ist insbesondere in Ausführungen, bei denen im Faltenpack ein HEPA-Filtermedium zum Einsatz kommt, welches in der Regel vergleichsweise dünn ist, von Vorteil.

Es wird ferner ein Verfahren zum Herstellen eines Filterelements vorgeschlagen, bei dem an ein Faltenpack aus zickzackförmig gefaltetem Filtermaterial ein das Faltenpack zumindest teilweise umlaufendes und seitlich abstehendes Rahmenelement angebracht wird. Ferner wird eine Rahmeneinrichtung an das seitlich abstehende Rahmenelement in einem Spritzgussvorgang angespritzt.

Das vorgeschlagene Filterelement, bei dem mithilfe eines Spritzgussvorgangs oder eines Spritzgussverfahrens eine Rahmeneinrichtung an seitlich abstehende Rahmenelemente angespritzt ist, lässt sich leicht herstellen und erfordert neben dem Faltenpack als Grundbestandteil nur geringe weitere strukturelle Elemente, wie die Rahmenelemente.

Außerdem wird ein Innenraumluftfilter mit einem derartigen Filterelement vorgeschlagen. Das Rahmenelement umfasst einen seitlich über eine Breite und/oder Höhe des Faltenpacks überstehenden Abschnitt. Die Höhe des Faltenpacks ergibt sich aus der Höhe der Faltungen, aus denen das zickzackförmig gefaltete Filtermaterial gebildet ist. Die Breite des Faltenpacks erstreckt sich in der Regel längs der jeweiligen Faltkanten.

Das Rahmenelement kann ein überstehender Abschnitt eines am Faltprofil des Faltenpacks angebrachten Seitenbandes sein. Alternativ kann das Rahmenelement ein seitlich über eine Länge und/oder Höhe des Faltenpacks überstehender Abschnitt an einem Endfaltenabschnitt des Faltenpacks angebrachten Kopfbandes sein. Die Länge des Faltenpacks ergibt sich in der Regel entlang der Maschinenrichtung oder quer zu den Faltkanten des Faltenpacks.

Insofern ist es möglich, das Rahmenelement insbesondere aus demselben Material wie das Filtermaterial zu fertigen. An die Filtrationseigenschaften der Seiten- oder Kopfbänder müssen nicht zwingend dieselben Filtrationseigenschaften wie an das Filtermaterial gestellt werden.

In Ausführungsformen hat das Seitenband und/oder das Kopfband ein L-Profil, wobei der kürzere Abschnitt oder Schenkel dem jeweiligen überstehenden Abschnitt entspricht. Durch den überstehenden Abschnitt kann die Rahmeneinrichtung aufwandsgünstig an den im Inneren des jeweiligen Rahmens liegenden Faltenpack angeformt werden.

In Ausführungsformen steht der überstehende Abschnitt und/oder die Rahmeneinrichtung seitlich über eine Höhe des Faltenpacks hinweg von dem Faltenpack ab. Das Rahmelement kann dabei schräg seitlich und über die Höhe des Faltenpacks hinweg abstehen. Dadurch wird eine Spritzgussanformung der Rahmeneinrichtung an das Rahmenelement erleichtert.

In Ausführungsformen ist die Rahmeneinrichtung ausschließlich durch Umspritzen an dem Rahmenelement befestigt. Vorzugsweise ist die Rahmeneinrichtung nicht direkt an Faltkanten und/oder Faltprofile des Faltenpacks angespritzt ausgebildet. Dadurch wird die Filterfläche optimiert, weil das Material der Rahmeneinrichtung das Filtermaterial nicht bedeckt. Insofern ist in Ausführungsformen vorzugsweise die Rahmeneinrichtung nicht mit dem zickzackförmig gefalteten Filtermaterial verbunden oder in Kontakt.

Das Rahmenelement weist ein Vliesmaterial auf oder besteht daraus, wobei das Vliesmaterial insbesondere ein Spinnvlies ist, das bevorzugt zumindest anteilig Synthetikfasern aufweist.

Das Vliesmaterial des Rahmenelements kann eine Luftdurchlässigkeit bei 200 Pa zwischen 200 und 3500 l/m²s, bevorzugt zwischen 400 und 1800 l/m²s, haben. Alternativ oder zusätzlich kann das Vliesmaterial des Rahmenelements eine Dicke zwischen 1 und 6 mm aufweisen und/oder ein Flächengewicht zwischen 100 und 500 g/m², bevorzugt zwischen 230 und 290 g/m², aufweisen.

In einer Variante des Herstellungsverfahrens wird das Rahmenelement in einem Spritzgusswerkzeug derart an einer Teilungskontur des Spritzgusswerkzeugs eingeklemmt, dass bei dem Spritzgussvorgang kein Material der Rahmeneinrichtung direkt an Faltkanten und/oder Faltprofile des Faltenpacks gelangt.

In Ausführungsformen ist das Rahmenelement entlang einer Längs- und/oder Breitseite des Faltenpacks streifenförmig, bandförmig und/oder flächig ausgebildet. Das Rahmenelement kann beispielsweise wie das Seiten- oder Kopfband aus einem Vliesmaterial gefertigt sein.

Die Rahmeneinrichtung umfasst in Ausführungsformen das Faltenpack in der Art eines Rahmens und ist zum radialen Dichten entlang einer Durchströmrichtung durch das Faltenpack ausgebildet. Das Faltenpack kann beispielsweise quaderförmig ausgebildet sein, wobei die Durchströmrichtung in der Regel quer zu einer Maschinenrichtung und quer zu einer Orientierung der Faltkanten gedacht ist.

In Ausführungsformen hat das Rahmenelement in einem Übergangsbereich zu einem Seitenbandabschnitt, einem Kopfbandabschnitt und/oder einem der Höhe des Faltenpacks entsprechenden Endfaltenabschnitt einen streifenförmigen Bereich, der frei von einem spritzvergossenen Material der Rahmeneinrichtung ist.

Insofern kann gewährleistet sein, dass kein Material der Rahmeneinrichtung direkt an das Filtermaterial bzw. das Faltenpack gelangt. Der entsprechende streifenförmige Bereich in dem Übergangsbereich kann bei der Herstellung durch ein Einklemmen zwischen zwei Teilen entlang der Teilungskontur des Spritzgusswerkzeugs erzielt werden.

Es wird darüber hinaus eine Filteranordnung mit einem Filtergehäuse und einem Filterelement, wie zuvor oder im Folgenden beschrieben ist, vorgeschlagen. Das Filterelement ist zumindest teilweise in dem Filtergehäuse aufnehmbar, und die Rahmeneinrichtung wird von einer Gehäusetrennlinie axial entlang einer Durchströmrichtung eingespannt. Insbesondere durch das seitliche Abstehen der Rahmeneinrichtung kann eine axiale Abdichtung leicht durch eine geeignete Dichtgeometrie der Rahmeneinrichtung erzielt werden.

Das Filterelement umfasst beispielsweise ein Filtermaterial und ein oder mehrere Stabilisierungselemente, insbesondere in der Art der Seitenbänder und/oder Kopfbänder (auch als Stirnbänder bezeichnet), welche das Filtermaterial zumindest abschnittsweise stabilisieren, um dessen Form, insbesondere im Filterbetrieb, aufrechtzuerhalten. Die Stabilisierungselemente, insbesondere die Seiten- und Kopfbänder, können dabei einen geschlossenen oder offenen Rahmen - auch materialeinstückig - ausbilden, welcher das Filtermaterial umgibt. Vorzugsweise umfasst das Filterelement für das Faltenpack zwei Kopfbänder und zwei Seitenbänder, die mit dem Faltenpack, insbesondere stoffschlüssig, verbunden sind und dieses rahmenförmig als Rahmenelemente umschließen. Die Seiten- und Kopfbänder sind z. B. aus Filtergewebe, Filtergelege oder Filtervlies gebildet.

Das Filtermaterial kann gefaltet oder wellenförmig ausgebildet sein. Als Faltungen sind beispielsweise Zickzack- oder W-Faltungen bekannt. Das Filtermaterial kann geprägt und anschließend an Prägekanten unter Ausbildung von Faltkanten scharfkantig gefaltet sein. Als Ausgangsmaterial kann ein flächiger Materialfilterbogen dienen, welcher entsprechend umgeformt wird. Das Filtermaterial ist beispielsweise ein Filtergewebe, ein Filtergelege oder ein Filtervlies. Insbesondere kann das Filtermaterial in einem Spinnvlies- oder Meltblownverfahren hergestellt sein. Weiter kann das Filtermedium verfilzt oder genadelt sein. Das Filtermaterial kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Das Filtermaterial kann ein- oder mehrlagig sein. Es kann ferner ein Adsorptionsmittel, wie etwa Aktivkohle, aufweisen. Weiterhin kann das Filtermaterial eine antimikrobielle und/oder antiallergene Wirkung aufweisen. Als antimikrobieller Stoff kommt beispielsweise Zink-Pyrithion oder Nanosilber, als anitallergener Stoff beispielsweise Polyphenol in Betracht.

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

Ein insbesondere offenes Filtermaterial kann dazu eingerichtet sein, Partikel des Teststaubs A4 nach ISO 12103-1 aus einem Luftstrom mit einer Filtrationsgeschwindigkeit von 0,10 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 71460-1 erfolgen.

Ein insbesondere hochabscheidendes Filtermaterial kann dazu eingerichtet sein, Partikel des Teststaubs A2 nach ISO 12103-1 sowie NaCl-Aerosolpartikel gemäß DIN 71460-1 aus einem Luftstrom mit einer Filtrationsgeschwindigkeit von 0,10 bis 0,30 m/s, bezogen auf die Filtermedienfläche, bei einer Luftdurchlässigkeit von größer 350 l/m²s (bestimmt gemäß ISO 9237 bei 200 Pa) zu entfernen. Die Ermittlung der Filtrationskennwerte kann beispielsweise gemäß DIN 71460-1 erfolgen.

In Ausführungsformen ist das Filtermaterial als ein synthetisches Medium mit Mehrlagenaufbau gefertigt. Eine Grammatur des Filtermaterials beträgt vorzugsweise 50 - 150 g/m². Das Filtermaterial entspricht vorzugsweise einer Effizienzklasse von E10 - H14 nach DIN EN 1822-3 in der Fassung zum Anmeldetag dieser Anmeldung.

In Varianten beträgt der Faltenabstand weniger als 5 mm. Denkbar ist eine Ausführung des Filterelements als HEPA-Filter. Eine Materialdicke des Filtermaterials ist beispielsweise zwischen 0,2 mm und 1 mm.

In Ausführungsformen ist die Rahmeneinrichtung aus einem Rahmenmaterial gebildet, das ein thermoplastisches Elastomermaterial umfasst. In Frage kommt insbesondere ein Elastomer gemäß der ISO 18064 in der Fassung zum Anmeldetag dieser Anmeldung, wie Kautschukmaterialien, TPE, PUR, geschäumte Polymere und sonstige geeignet erscheinende Dichtungsmaterialien.

Die Rahmeneinrichtung kann eine Dichtung aufweisen, welche eine dem Filterelement zugeordnete Rohseite gegenüber einer Reinseite desselben abdichtet. Die Dichtung kann bauteilidentisch mit der in einem Spritzgussverfahren hergestellten Rahmeneinrichtung sind. Alternativ kann die Dichtung als Zusatzbauteil ausgebildet sein. So kann die Dichtung beispielsweise an dem Rahmenmaterial angebracht sein. Denkbar ist auch eine zweikomponentige Ausführung der Rahmeneinrichtung. Ein harter innerer Rahmenbereich schafft dann den Übergang zum Rahmenelement und ein weicherer äußerer Bereich dient der Dichtung.

Es wird ferner ein Filterelement vorgeschlagen, welches nach dem vorgenannte Verfahren hergestellt ist.

Das Filterelement bzw. kann in Personenkraftwagen, Lastkraftwagen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, in Brennstoffzellen oder in der Gebäudetechnik Anwendung finden. Diese Kraftwagen oder Fahrzeuge können elektrisch und/oder mittels Kraftstoff (insbesondere Benzin oder Diesel) betrieben werden. Im Hinblick auf die Gebäudetechnik kommen insbesondere stationäre Anlagen zur Behandlung von Luft in Betracht.

Noch weiterhin betrifft die Erfindung ein Fahrzeug mit einer solchen Filteranordnung.

Die für das Filterelement beschriebenen Merkmale gelten für den Innenraumluftfilter, die Filteranordnung sowie das Fahrzeug entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine schematische Darstellung eines allgemeinen Kraftfahrzeugs mit einem Innenraumluftfilter;
Fig. 2: eine perspektivische Darstellung eines Filtermaterials;
Fig. 3: eine schematische Ansicht eines Faltenpacks gemäß einer Ausführungsform;
Fig. 4: eine schematische Ansicht eines Filterelements gemäß einer Ausführungsform in einer Draufsicht;
Fig. 5: einen Querschnitt A-A aus Fig. 4;
Fig. 6: eine Seitenansicht mit einem randseitigen Aufriss aus Fig. 4;
Fig. 7: einen vergrößerten Ausschnitt Z aus Fig. 6;
Fig. 8: ein Ausschnitt einer schematischen Ansicht einer Spitzgussform zur Herstellung eines Filterelements aus Fig. 4 - 7.

### Ausführungsform(en) der Erfindung

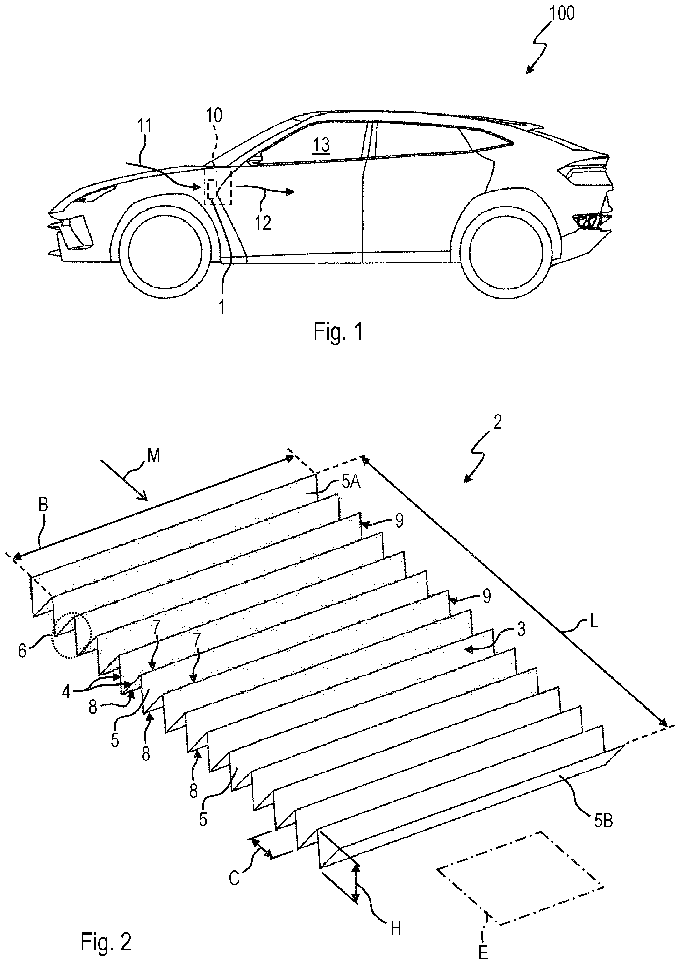

Fig. 1 zeigt ein Kraftfahrzeug 100 mit einer Klimaanlage, die eine Filteranordnung 10 umfasst. Beispielsweise kann die Klimaanlage als Heiz-Klimaanlage ausgebildet sein. Die Klimaanlage bzw. die Filteranordnung 10 nimmt Außenluft 11 auf und führt gefilterte Luft 12 einer Kabine 13 (auch als Fahrgastraum bezeichnet) des Kraftfahrzeugs 100 zu. Das Filtern erfolgt über ein als einen Innenraumluftfilter ausgebildetes Filterelement 1.

Fig. 2 zeigt ein gefaltetes Filtermaterial 3 isoliert und kann in der dargestellten Form als ein Faltenpack 2 bezeichnet werden. Das Filtermaterial 3 ist beispielsweise ein Filtervlies, Filtergewebe, Filtergelege oder Filterfilz, insbesondere ein Nadelfilz. Insbesondere kann das Filtermaterial 3 in einem Meltblown-Verfahren hergestellt sein. Das Filtermaterial 3 kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung M orientiert sein. Auch können die Fasern in einer Raumrichtung gestreckt sein. Das Filtermaterial 3 kann ein- oder mehrlagig ausgebildet sein.

Das Filtermaterial 3 umfasst zur Bilung des Fatenpacks 2 Falten 6 auf, welche sich typischerweise quer zur Maschinenrichtung M erstrecken. Das gefaltete Filtermaterial 3 wird auch als Plissee bezeichnet. Die Falten 6 können mittels Faltens entlang scharfer Faltkanten 7, 8 (auch als Faltenspitzen bezeichnet) oder durch eine wellenförmige Ausführung des Filtermaterials 2 erzeugt werden. Man erkennt in der Fig. 2 obere Faltkanten 7 und in der Orientierung der Fig. 2 unterseitige Faltkanten 8. Eine jeweilige Falte 6 kann durch zwei benachbarte Faltabschnitte 5 definiert sein, welche über eine entsprechende Faltkante 8 miteinander verbunden sind. Die Faltung ist als Zick-Zack-Faltung ausgeführt. Es ergibt sich insofern ein zickzackförmiges Faltprofil 4, 9 and den Seiten des Faltenpacks 2.

Auch eine Faltung, bei welcher die Falten 6 eine variierende Höhe H aufweisen, ist möglich. Ferner kann der Faltenabstand C zwischen den Falten 6 bzw. benachbarten Faltekanten 7, 8 gleicher Faltorientierung variieren. Das Filtermaterial 3 kann selbsttragend ausgeführt sein, d. h. die Falten 6 sind bei einer bestimmungsgemäßen Durchströmung im Filterbetrieb formstabil.

Das Filtermaterial 3 wird in Maschinenrichtung M von Endfaltenabschnitten 5A, 5B begrenzt. Quer dazu wird das Filtermaterial 3 von seitlichen Faltenstirnkanten (auch als Faltenprofile 4, 9 bezeichnet) begrenzt. Mit "Faltenstirnkante" ist die seitliche Kante des Filtermaterials 3 an der Seite des Faltenpacks 2 gemeint, welche sich zwischen benachbarten Faltkanten 7, 8 einer jeweiligen Falte 6 erstreckt.

Das Filtermaterial 3 kann in der Draufsicht, also in der Ebene E seiner flächigen Erstreckung, eine rechteckige Gestalt aufweisen. Allerdings ist auch eine dreieckige, fünf- oder mehreckige, runde oder ovale Gestalt denkbar.

In der Darstellung der Fig. 2 ist eine Länge L des Faltenpacks 2 entlang der Maschinenrichtung M und quer zu den Faltkanten 7, 8 angedeutet. Entlang der Faltkanten 7, 8 und quer zur Maschinenrichtung M ist üblicherweise eine Breite B des Faltenpacks 2 angegeben.

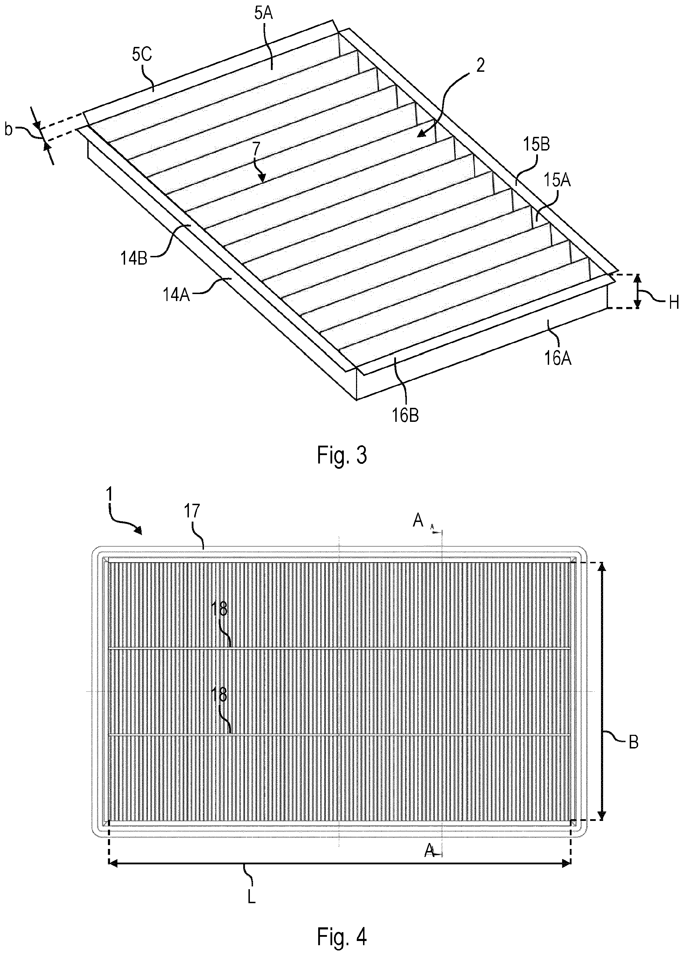

Zur Herstellung eines Filterelementes, beispielsweise eines Innenraumluftfilterelementes, wird an das in der Fig. 2 dargestellte Faltenpack 2 ein umlaufendes Rahmelement angebracht. In der Fig. 3 ist das aus der Fig. 2 dargestellte Faltenpack 2 mit oberseitigen Faltkanten 7 angedeutet. Auf die Faltprofile 4, 9 sind Seitenbänder 14, 15 angebracht. Die Seitenbänder 14, 15 haben jeweils ein L-Profil mit einem Abschnitt 14A, 15A, der an die Faltprofile 4, 9 beispielsweise angeklebt ist, und einen seitlich abstehenden Schenkel 14B, 15B. Die seitlich abstehenden Seitenbandabschnitte bzw. Schenkel 14B, 15B sind Teil eines Rahmenelementes. Die in der Orientierung der Fig. 2 senkrechten Schenkel 14A, 15A ensprechen der Höhe H des Faltenpacks 2.

An der Kopfseite, in der Orientierung der Fig. 3 nach vorne rechts gerichtet, ist das Faltenpack 2 mit einem Kopfband 16 abgeschlossen. Das Kopfband umfasst wiederum einen Abschnitt oder Schenkel 16A, der der Höhe H des Faltenpacks 2 entspricht, und einen seitlich abstehenden Schenkel 16B. An dem dem Kopfband 16 gegenüberliegenden Kopfabschnitt des Faltenpacks 2, der in der Orientierung der Fig. 3 oben links angedeutet ist, hat der Endfaltenabschnitt 5A einen über die Höhe H und die Länge L des Faltenpacks 2 hinausgehenden abstehenden Schenkel 5C. Der Schenkel 5C ist von dem Endfaltenabschnitt 5A durch eine Faltkante getrennt.

Die jeweiligen über die Höhe H abstehenden Abschnitte 5C, 14B, 15B, 16B haben eine Breite b, die es erlaubt, dass in einem folgenden Spritzgussvorgang eine feste Verbindung mit dem spritzgegossenen Material eingegangen werden kann. Insofern zeigt die Fig. 3 ein Faltenpack 2, an dem ein von dem Faltenpack 2 seitlich abstehendes Rahmenelement gebildet ist. Das Rahmenelement wird hier durch die vier abstehenden Abschnitte 5C, 14B, 15B und 16B gebildet.

An die abstehenden Abschnitte 5C, 14B, 15B, 16B ist, wie es in der Fig. 4 gezeigt ist, eine Rahmeneinrichtung 17 angeformt. Die Rahmeneinrichtung 17 ist in der Fig. 4, die eine Draufsicht auf das ausgebildete Filterelement 1 zeigt, in ihrer lateralen Ausdehnung breiter als die Breite B des Faltenpacks 2 und länger als die Länge L des Faltenpacks 2. In der Darstellung in Fig. 4 sind die abstehenden Bschnitte 5C, 14B, 15B, 16B innerhalb der Rahmeneinrichtung 17 von dem Material der Rahmeneinrichtung 17 umspritzt bzw. eingeschlossen.

Das Filterelement 1 in der Ausführungsform der Fig. 4 zeigt ferner zwei parallel zur Länge des Filterelementes 1 auf die oberen Faltkanten und die dazwischenliegenden Faltabschnitte aufgebrachte Klebstoffspuren 18, die beispielsweise aus einem Heißklebermaterial gebildet sind. Die Klebstoffspuren 18 stabilisieren die Faltenabstände und dringen beispielsweise in die Faltungen ein.

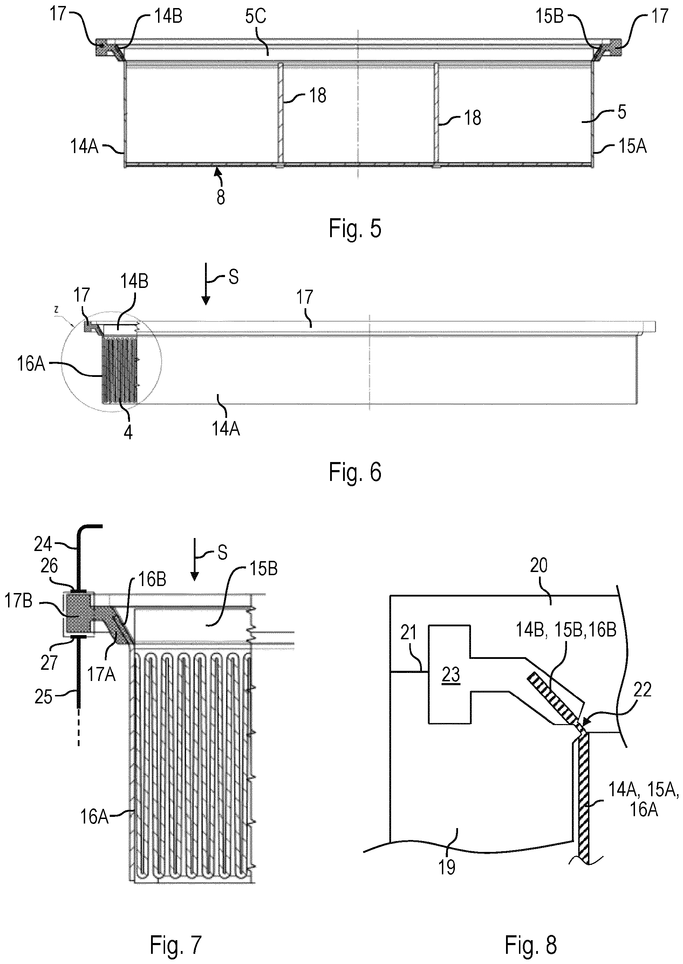

In den Fig. 5, 6 und 7 sind weitere Darstellungen des Filterelementes 1 wiedergegeben. Fig. 5 zeigt eine Querschnittsansicht A-A. Man erkennt in der Fig. 5 die Seitenbandabschnitte 14A, 15A und deren überstehende Abschnitte 14B, 15B. Die als Rahmenelemente wirkenden abstehenden Abschnitte 14B, 15B weisen in der Orientierung der Fig. 5 schräg nach oben und seitlich von dem Faltenpack 2 weg. Links und rechts erkennt man in der Fig. 5 das Querschnittsprofil der Rahmeneinrichtung 17, wobei die Rahmenelemente bzw. überstehenden Abschnitte 14B, 15B umschlossen sind. Ferner sind in der Mitte die Klebstoffspuren 18, beispielsweise aus Heißkleber, dargestellt, und die unteren Faltkanten 8.

Die Fig. 6 zeigt eine Ansicht des Filterelementes 1 quer zur Querschnittsrichtung A-A mit Blick auf das Seitenband 14. Links ist ein Aufriss Z angedeutet, der die Faltprofile 4 freigibt. Ferner erkennt man auf der linken Seite ein Kopfband 16A. Die Fig. 7 zeigt eine vergrößerte Ansicht des Ausschnitts Z aus der Fig. 6. Man erkennt, dass in einem Spritzgussvorgang die Rahmeneinrichtung 17 an den Abschnitt 16B angespritzt ist. Die Rahmeneinrichtung 17 umfasst dabei in der Orientierung der Fig. 7 einen linken Axialdichtungsabschnitt 17B und einen Befestigungsabschnitt 17A, in den der überstehende Abschnitt 16B bzw. der Teil des Rahmenelementes 16B eingeschlossen ist. Analog sind die nicht dargestellten überstehenden Abschnitte entlang der Länge des Filterelements an der Rahmeneinrichtung 17 befestigt.

Die Rahmeneinrichtung 17 berührt dabei weder die Faltkanten noch Materialabschnitte des Filterelementes 1 unterhalb der Höhe H der Faltungen. Die Ausgestaltung des Rahmens bzw. der Rahmeneinrichtung 17 verhindert, dass Filterfläche durch im Spritzguss angespritztes Material des Rahmens 17 verloren geht. Die Durchströmrichtung S durch das Filterelement erfolgt in der Orientierung der Fig. 5, 6 und 7 von oben nach unten.

In einer Filteranordnung wird das Filterelement 1 in einem Gehäuse aufgenommen. Die Fig. 7 zeigt einen Teil des Gehäuses mit einem oberen Gehäuseabschnitt 24 und einem unteren Gehäuseabschnitt 25. Zwischen diesen beiden Abschnitten 24, 25 ist eine Trennlinie oder Trennkotur des Gehäuses 24, 25. Im eingebauten Zustand des Filterelementes 1 wird der Dichtungsabschnitt 17B der Rahmeneinrichtung 17 an der Trennkontur 26, 27 des Gehäuses eingefasst oder axial verspannt. Dadurch wird eine sichere Abdichtung zwischen dem Roh- und Reinfluidbereich der sich ergebenden Filteranordnung gewährleistet.

Bei einem Herstellungsverfahren des Filterelementes 1 wird die Rahmeneinrichtung 17 insbesondere unter Verwendung eines Spritzgusswerkzeugs in einem Spritzgussvorgang erzeugt. Die Fig. 8 zeigt nun einen Ausschnitt einer schematischen Ansicht einer Spritzgussform bzw. eines Spritzgusswerkzeugs 19, 20 zur Herstellung eines Filterelements 1, wie es zuvor beschrieben wurde. In der Fig. 8 rechts ist der Übersicht halber lediglich der von dem Faltenpack abstehende Abschnitt 14B, 15B bzw. 16B innerhalb einer Kavität 23 des Spritzgusswerkzeugs 19, 20 angedeutet. Man erkennt ferner in der Orientierung der Fig. 8 senkrecht einen Teil des der Höhe des Faltenpacks entsprechenden Abschnitts 14A, 15A bzw. 16A.

In einem Übergangsbereich zwischen dem senkrechten Abschnitt 14A, 15A, 16A des Seiten- oder Kopfbandes und dem jeweiligen abstehenden Abschnitt 14B, 15B bzw. 16B wird das Material des Seiten- oder Kopfbandes von den beiden Werkzeugteilen 19, 20 eingeklemmt. Dies erfolgt entlang einer Teilungskontur 22 des Spritzgusswerkzeugs. Eine weitere Teilungskontur 21 ist in der Fig. 8 links neben der Kavität 23 angedeutet.

Das Spritzgusswerkzeug bzw. das Werkzeugunterteil 19 und das Werkzeugoberteil 20 werden entlang der Teilungskonturen 21, 22 unter Einklemmen des überstehenden Abschnitts 14B, 15B, 16B aneinandergepresst. Anschließend erfolgt ein Einspritzen des die Rahmeneinrichtung 17 bildenden Kunststoffmaterials. Nach dem Aushärten des Spritzgussmaterials ist unter Vermeidung einer Verschmutzung des Faltenpacks mit diesem Material die Rahmeneinrichtung 17 inklusive einer geeigneten Dichtungskontur (vgl. Fig. 7) gefertigt.

Zur verbesserten Dichteigenschaft in radialer, aber auch axialer Richtung kann auch ein Zweikomponenten-Spritzgussverfahren eingesetzt werden. Insgesamt ermöglicht das vorgeschlagene Herstellungsverfahren eine einfache Herstellung von Filterelementen, insbesondere für die Anwendung im Innenraumluftfilterbereich.

### Verwendete Bezugszeichen:

- 1: Filterelement/Innenraumluftfilter
- 2: Faltenpack
- 3: Filtermaterial
- 4: Faltprofil
- 5: Faltabschnitt
- 5A, 5B: Endfaltenabschnitt
- 5C: Rahmenelement
- 6: Faltung
- 7, 8: Faltkante
- 9: Faltprofil
- 10: Filtereinrichtung
- 11: Rohluft
- 12: gefilterte Luft
- 13: Kabine
- 14 (14A, 14B): Seitenband
- 15 (15A, 15B): Seitenband
- 14B, 15B: Rahmenelement
- 16 (16A, 16B): Kopfband
- 17: Rahmeneinrichtung
- 17A: Befestigungsabschnitt
- 17B: Axialdichtungsabschnitt
- 18: Kelbstoffspur
- 19, 20: Spritzgusswerkzeug
- 21, 22: Werkzeugtrennung
- 23: Kavität
- 24,25: Gehäuseteile
- 26, 27: Trennkontur
- 100: Fahrzeug
- b: Überstand
- B: Breite
- C: Faltenabstand
- E: Ebene
- H: Höhe
- L: Länge
- M: Maschinenrichtung
- S: Durchströmrichtung

## Patentansprüche

1. Filterelement (1) mit einem Faltenpack (2) aus zickzackförmig gefaltetem Filtermaterial (3), einem an dem Faltenpack (2) angebrachten und das Faltenpack (2) zumindest teilweise umlaufenden und seitlich abstehenden luftdurchlässigen Rahmenelement (5C, 14B, 15B, 16B), das ein Vliesmaterial aufweist oder daraus besteht, und einer an dem Rahmenelement (5C, 14B, 15B, 16B) befestigten Rahmeneinrichtung (17), wobei die Rahmeneinrichtung (17) als ein an das seitlich abstehende Rahmenelement (5C, 14B, 15B, 16B) angespritztes Kunststoffspritzgussteil ausgeführt ist, wobei das Rahmenelement (5C, 14B, 15B, 16B) ein seitlich über eine Breite (B) und/oder Höhe (H) des Faltenpacks (2) überstehender Abschnitt (14B, 15B) eines auf Faltprofile (4) des Faltenpacks (2) angebrachten Seitenbandes (14, 15) oder ein seitlich über eine Länge (L) und/oder Höhe (H) des Faltenpacks (2) überstehender Abschnitt (16B) an einem Endfaltenabschnitt (5A) des Faltenpacks (2) angebrachten Kopfbandes (16) ist.

2. Filterelement nach Anspruch 1, wobei das Rahmenelement (5C, 14B, 15B, 16B), der überstehende Abschnitt (14B, 15B, 16B) und/oder die Rahmeneinrichtung (17) seitlich über eine Höhe (H) des Faltenpacks hinweg von dem Faltenpack (2) absteht.

3. Filterelement nach Anspruch 1 oder 2, wobei die Rahmeneinrichtung (17) ausschließlich durch Umspritzen an dem Rahmenelement (5C, 14B, 15B, 16B) befestigt ist und insbesondere nicht direkt an Faltkanten (7, 8) und/oder Faltprofile (4, 9) des Faltenpacks (2) angespritzt ausgebildet ist.

4. Filterelement nach einem der Ansprüche 1 - 3, wobei das Vliesmaterial ein Spinnvlies ist, das bevorzugt zumindest anteilig Synthetikfasern aufweist.

5. Filterelement nach Anspruch 4, wobei das Vliesmaterial des Rahmenelements (5C, 14B, 15B, 16B)
- eine Luftdurchlässigkeit bei 200 Pa zwischen 200 und 3500 l/m²s, bevorzugt zwischen 400 und 1800 l/m²s, aufweist und/oder
- eine Dicke zwischen 1 und 6 mm aufweist und/oder
- ein Flächengewicht zwischen 100 und 500 g/m², bevorzugt zwischen 230 und 290 g/m², aufweist.

6. Filterelement nach einem der Ansprüche 1 - 5, wobei das Rahmenelement (5C, 14B, 15B, 16B) entlang einer Längs- und/oder Breitseite des Faltenpacks (2) streifenförmig, bandförmig und/oder flächig ausgebildet ist.

7. Filterelement nach einem der Ansprüche 1 - 6, wobei die Rahmeneinrichtung (17) das Faltenpack (2) umschließt und zum radialen Dichten entlang einer Durchströmrichtung (S) ausgebildet ist.

8. Filterelement nach einem der Ansprüche 1 - 6, wobei das Rahmenelement (5C, 14B, 15B, 16B) in einem Übergangsbereich zu einem Seitenbandabschnitt (14A, 15A), Kopfbandabschnitt (16A) und/oder einem der Höhe (H) des Faltenpacks (2) entsprechenden Endfaltenabschnitt (5A, 5B) frei von einem spritzgegossenen Material der Rahmeneinrichtung (17) ist.

9. Verfahren zum Herstellen eines Filterelements, insbesondere nach einem der Ansprüche 1 - 8, bei dem an ein Faltenpack (2) aus zickzackförmig gefaltetem Filtermaterial (3) ein das Faltenpack (2) zumindest teilweise umlaufendes und seitlich abstehendes luftdurchlässiges Rahmenelement (5C, 14B, 15B, 16B), das ein Vliesmaterial aufweist oder daraus besteht, angebracht wird und eine Rahmeneinrichtung (17) an das seitlich abstehende Rahmenelement (5C, 14B, 15B, 16B) in einem Spritzgussvorgang angespritzt wird, wobei das Rahmenelement (5C, 14B, 15B, 16B) ein seitlich über eine Breite (B) und/oder Höhe (H) des Faltenpacks (2) überstehender Abschnitt (14B, 15B) eines auf Faltprofile (4) des Faltenpacks (2) angebrachten Seitenbandes (14, 15) oder ein seitlich über eine Länge (L) und/oder Höhe (H) des Faltenpacks (2) überstehender Abschnitt (16B) an einem Endfaltenabschnitt (5A) des Faltenpacks (2) angebrachten Kopfbandes (16) ist.

10. Verfahren nach Anspruch 9, wobei das Rahmenelement (5C, 14B, 15B, 16B) in einem Spritzgusswerkzeug (19, 20) derart entlang einer Teilungskontur (22) des Spritzgusswerkzeugs (19, 20) eingeklemmt wird, dass bei dem Spritzgussvorgang kein Material der Rahmeneinrichtung (17) direkt an Faltkanten (7, 8) und/oder Faltprofile (4, 9) des Faltenpacks (2) gelangt.

11. Filteranordnung (10) mit einem Filtergehäuse (24, 25) und einem Filterelement (1) nach einem der Ansprüche 1 - 8, das zumindest teilweise in das Filtergehäuse (24, 25) aufnehmbar ist, wobei die Rahmeneinrichtung (17) an einer Gehäusetrennlinie (26, 27) axial entlang einer Durchströmrichtung (S) eingespannt wird.

## Claims

1. A filter element (1) having a pleated pack (2) of zigzag-shaped folded filter material (3), an air-permeable frame element (5C, 14B, 15B, 16B) attached to the pleated pack (2) and at least partially extending around the pleated pack (2) and projecting laterally, said frame element featuring a non-woven fabric material or consisting thereof, and a frame device (17) attached to the frame element (5C, 14B, 15B, 16B), wherein the frame device (17) is designed as a plastic injection-molded part molded onto the laterally projecting frame element (5C, 14B, 15B, 16B), wherein the frame element (5C, 14B, 15B, 16B) is a section (14B, 15B) of a sideband (14, 15) attached to folding profiles (4) of the pleated pack (2), said section projecting laterally across a width (B) and/or height (H) of the pleated pack (2), or a section (16B) projecting laterally across a length (L) and/or height (H) of the pleated pack (2) on a headband (16) attached to an end fold section (5A) of the pleated pack (2).

2. The filter element according to claim 1, wherein the frame element (5C, 14B, 15B, 16B), the projecting section (14B, 15B, 16B) and/or the frame device (17) project laterally from the pleated pack (2) across a height (H) of the pleated pack.

3. The filter element according to claim 1 or 2, wherein the frame device (17) is attached to the frame element (5C, 14B, 15B, 16B) exclusively by overmolding and, in particular, is not designed to be injection-molded directly onto fold edges (7, 8) and/or folding profiles (4, 9) of the pleated pack (2).

4. The filter element according to one of the claims 1 to 3, wherein the non-woven fabric is a spunbonded fabric which preferably features synthetic fibers at least proportionately.

5. The filter element according to claim 4, wherein the non-woven fabric of the frame element (5C, 14B, 15B, 16B)
- features an air permeability at 200 Pa between 200 and 3500 l/m²s, preferably between 400 and 1800 l/m²s, and/or
- features a thickness between 1 and 6 mm, and/or
- features a grammage between 100 and 500 g/m², preferably between 230 and 290 g/m².

6. The filter element according to one of the claims 1 to 5, wherein the frame element (5C, 14B, 15B, 16B) has a strip-shaped, band-shaped and/or flat design along a longitudinal and/or wide side of the pleated pack (2).

7. The filter element according to one of the claims 1 to 6, wherein the frame device (17) encloses the pleated pack (2) and is designed for radial sealing along a flow direction (S).

8. The filter element according to one of the claims 1 to 6, wherein the frame element (5C, 14B, 15B, 16B) is free of an injection-molded material of the frame device (17) in a transition area to a sideband section (14A, 15A), headband section (16A) and/or an end fold section (5A, 5B) corresponding to the height (H) of the pleated pack (2).

9. A method for manufacturing a filter element, in particular according to one of claims 1 to 8, in which an air-permeable frame element (5C, 14B, 15B, 16B) at least partially extending around the pleated pack (2) and protruding laterally is attached to a pleated pack (2) of zigzag-shaped folded filter material (3), said frame element featuring a non-woven fabric material or consisting thereof, and a frame device (17) is applied to the laterally protruding frame element (5C, 14B, 15B, 16B) in an injection-molding process, wherein the frame element (5C, 14B, 15B, 16B) is a section (14B, 15B) of a sideband (14, 15) attached to folding profiles (4) of the pleated pack (2), said section projecting laterally across a width (B) and/or height (H) of the pleated pack (2), or a section (16B) of a headband (16) attached to an end fold section (5A) of the pleated pack (2), said section projecting laterally across a length (L) and/or height (H) of the pleated pack (2).

10. The method according to claim 9, wherein the frame element (5C, 14B, 15B, 16B) is clamped in an injection molding tool (19, 20) along a parting contour (22) of the injection molding tool (19, 20) in such a way that no material of the frame device (17) directly reaches fold edges (7, 8) and/or folding profiles (4, 9) of the pleated pack (2) during the injection molding process.

11. A filter arrangement (10) having a filter housing (24, 25) and a filter element according to one of the claims 1 to 8, which is at least partially accommodatable in the filter housing (24, 25), wherein the frame device (17) is axially clamped along a flow direction (S) at a housing parting line (26, 27).

## Revendications

1. Elément filtrant (1) ayant un ensemble de plis (2) en matériau filtrant (3) plié en accordéon, un élément de cadre (5C, 14B, 15B, 16B) perméable à l'air, attaché à l'ensemble de plis (2) et entourant au moins partiellement l'ensemble de plis (2) et faisant saillie latéralement, ledit élément de cadre présentant un matériau non-tissé ou en est constitué, et un dispositif de cadre (17) attaché à l'élément de cadre (5C, 14B, 15B, 16B), dans lequel le dispositif de cadre (17) est réalisé en tant que pièce en matière plastique moulée par injection sur l'élément de cadre (5C, 14B, 15B, 16B) faisant saillie latéralement, dans lequel l'élément de cadre (5C, 14B, 15B, 16B) est une section (14B, 15B) faisant saillie latéralement sur une largeur (B) et/ou une hauteur (H) de l'ensemble de plis (2), d'une bande latérale (14, 15) attachée sur des profils de plis (4) de l'ensemble de plis (2) ou une section (16B) faisant saillie latéralement sur une longueur (L) et/ou une hauteur (H) de l'ensemble de plis (2) sur une bande frontale (16) attachée sur une section de plis d'extrémité (5A) de l'ensemble de plis (2).

2. Elément filtrant selon la revendication 1, dans lequel l'élément de cadre (5C, 14B, 15B, 16B), la section faisant saillie (14B, 15B, 16B) et/ou le dispositif de cadre (17) fait latéralement saillie de l'ensemble de plis (2) au-delà d'une hauteur (H) de l'ensemble de plis.

3. Elément filtrant selon la revendication 1 ou 2, dans lequel le dispositif de cadre (17) est attaché à l'élément de cadre (5C, 14B, 15B, 16B) exclusivement par surmoulage et n'est notamment pas réalisé par injection directe sur des arêtes de pliage (7, 8) et/ou des profils de pliage (4, 9) de l'ensemble de plis (2).

4. Elément filtrant selon l'une quelconque des revendications 1 à 3, dans lequel le matériau non-tissé est un matériau filé-lié qui présente de préférence au moins une partie de fibres synthétiques.

5. Élément filtrant selon la revendication 4, dans lequel le matériau non-tissé de l'élément de cadre (5C, 14B, 15B), 16B)
- présente une perméabilité à l'air à 200 Pa comprise entre 200 et 3500 l/m²s, de préférence entre 400 et 1800 l/m²s, et/ou
- présente une épaisseur entre 1 et 6 mm, et/ou
- présente un grammage compris entre 100 et 500 g/m2, de préférence entre 230 et 290 g/m2.

6. Elément filtrant selon l'une quelconque des revendications 1 à 5, dans lequel l'élément de cadre (5C, 14B, 15B, 16B) est réalisé sous forme de bande, de ruban et/ou de manière plane le long d'un côté longitudinal et/ou d'un côté large de l'ensemble de plis (2).

7. Elément filtrant selon l'une quelconque des revendications 1 à 6, dans lequel le dispositif de cadre (17) entoure l'ensemble de plis (2) et est réalisé pour assurer une étanchéité radiale le long d'une direction d'écoulement (S).

8. Elément filtrant selon l'une quelconque des revendications 1 à 6, dans lequel l'élément de cadre (5C, 14B, 15B, 16B) est exempt d'un matériau moulé par injection du dispositif de cadre (17) dans une zone de transition vers une section de bande latérale (14A, 15A), une section de bande de tête (16A) et/ou une section de plis d'extrémité (5A, 5B) correspondant à la hauteur (H) de l'ensemble de plis (2).

9. Procédé de fabrication d'un élément filtrant, notamment selon l'une quelconque des revendications 1 à 8, dans lequel est appliqué sur un ensemble de plis (2) en matériau filtrant (3) plié en accordéon un élément de cadre (5C, 14B, 15B, 16B) perméable à l'air entourant au moins partiellement l'ensemble de plis (2) et faisant saillie latéralement et qui présente un matériau non-tissé ou en est constitué, et un dispositif de cadre (17) est injecté sur l'élément de cadre (5C, 14B, 15B, 16B) faisant saillie latéralement lors d'une opération de moulage par injection, dans lequel l'élément de cadre (5C, 14B, 15B, 16B) est une section (14B, 15B) faisant saillie latéralement sur une largeur (B) et/ou une hauteur (H) de l'ensemble de plis (2) d'une bande latérale (14, 15) fixée sur des profils de pliage (4) de l'ensemble de plis (2) ou une section (16B) d'une bande de tête (16) fixée à une section de plis d'extrémité (5A) de l'ensemble de plis (2), ladite section faisant saillie latéralement sur une longueur (L) et/ou une hauteur (H) de l'ensemble de plis (2)

10. Procédé selon la revendication 9, dans lequel l'élément de cadre (5C, 14B, 15B, 16B) est serré dans un outil de moulage par injection (19, 20) le long d'un contour de division (22) de l'outil de moulage par injection (19, 20) de sorte que, lors de l'opération de moulage par injection, aucun matériau du dispositif de cadre (17) n'arrive directement sur les arêtes de pliage (7, 8) et/ou les profils de pli (4, 9) de l'ensemble de plis (2).

11. Ensemble de filtre (10) ayant un boîtier de filtre (24, 25) et un élément filtrant selon l'une quelconque des revendications 1 à 8, qui peut être logé au moins partiellement dans le boîtier de filtre (24, 25), dans lequel le dispositif de cadre (17) est serré axialement le long d'une direction d'écoulement (S) au niveau d'une ligne de séparation de boîtier (26, 27).
